# EUROPEAN PATENT APPLICATION

(11) **EP 4 703 928 A1**
(43) Date of publication of application: **04.03.2026**
(21) Application number: 24197063.1
(22) Date of filing: 28.08.2024
(51) Int. Cl.: G06F 21/57, G06F 21/64

(54) **METHOD FOR CREATING ATTESTATION EVIDENCE FOR AN INDUSTRIAL DEVICE**

(71) Applicant: Siemens Aktiengesellschaft, 80333 München (DE)
(72) Inventor: Falk, Rainer, 85435 Erding (DE); Feist, Christian Peter, 80689 München (DE); Hornung, Peter, 91054 Erlangen (DE); Kumari, Ankita, 81549 München (DE); Mantel, Martin, 91325 Adelsdorf (DE); Piccoli, Alessandro, 80333 München (DE); Pyka, Stefan, 85570 Markt Schwaben (DE); Sperl, Franz, 92526 Oberviechtach (DE); Zeschg, Thomas, 81543 München (DE)
(74) Representative: Siemens Patent Attorneys

(57) **Abstract**

A method for creating attestation evidence for an industrial device is provided. The attestation evidence is recreated after device boot and kept at least for a runtime period. The method involves measuring device software and/or device configuration to generate the attestation evidence. The recreated attestation evidence is stored in a protected storage. One or more logs are generated, containing information for a verifier to detect changes towards a known-good state of the industrial device. The measured software and/or device configuration is validated against previously measured software and/or device configuration. The attestation evidence is recreated after receiving a recreation trigger signal. The industrial device may comprise a manufacturing device, process automation device, logistics device, and/or autonomous vehicle.

## Description

The present invention relates to methods for creating attestation evidence for industrial devices, and in particular, to systems and techniques for recreating and maintaining attestations after device boot to enhance security and trust in industrial automation environments.

Remote attestation is a security mechanism used to verify the integrity and trustworthiness of computing systems and devices. In industrial automation environments, where the reliability and security of devices are paramount, remote attestation plays a crucial role in ensuring the authenticity and integrity of device software and configurations.

Traditional remote attestation approaches typically involve measuring the state of a device during its boot process and providing cryptographic evidence of these measurements to a remote verifier. This process allows the verifier to determine whether the device is in a known and trusted state before a relying party grants access to sensitive resources or services.

However, conventional attestation methods often have limitations when applied to industrial devices that may operate continuously for extended periods without rebooting. In such scenarios, the initial boot-time measurements may not accurately reflect the current state of the device, as software updates, configuration changes, or potential security compromises could occur during runtime.

Furthermore, industrial environments often require a high degree of flexibility and adaptability, with devices undergoing frequent updates and reconfigurations to meet changing operational needs. This dynamic nature poses challenges for maintaining an up-to-date and accurate representation of device integrity through traditional attestation mechanisms.

As industrial systems become increasingly interconnected and rely more heavily on digital technologies, the need for robust and continuous security assurance grows. Ensuring the ongoing trustworthiness of devices throughout their operational lifecycle is essential for maintaining the integrity and reliability of industrial processes.

There is a growing recognition in the field of industrial automation and cybersecurity that more advanced attestation techniques are needed to address these challenges. Improved methods for creating and maintaining attestations that can capture the current state of industrial devices, even after extended periods of operation, would greatly enhance the security posture of industrial systems.

Accordingly, it is the aim of the present invention to provide an improved method for creating attestation evidence for an industrial device.

This aim of the present invention is solved with the method for creating an attestation evidence for an industrial device having the features given in claim 1. Advantageous aspects of the invention are contained in the respective dependent claims, the following description and the drawing.

According to the present invention, a method for creating attestation evidence for an industrial device is provided. The method includes recreating at least a measurement after device boot and keeping the measurement at least for a runtime period. and providing the recreated measurement as current attestation evidence for validation. This approach may offer several advantages, including the ability to maintain an up-to-date representation of device integrity throughout extended operational periods without requiring device reboots.

In some aspects of the present invention, a previous measurement as previous attestation evidence (AE) may be considered, and the current attestation evidence is validated against the previous attestation evidence.

The attestation evidence may be generated by measuring the device software and/or device configuration. In some cases, measuring may involve computing a cryptographic hash, which may provide a secure and efficient means of verifying the integrity of device components.

In some aspects of the present invention, the attestation evidence may be provided to a remote attestation entity. This approach may enhance security by either involving a remote trusted component or a trusted third party, respectively, in the attestation process.

In preferable aspects of the method according to the invention, the recreated measurement may be stored in a protected storage, which may help prevent unauthorized access or tampering with the attestation data.

One or more logs may be generated, which contain more fine-grained information for a verifier to validate attestation evidence and to detect changes towards a known-good state of the industrial device. These logs may be persisted, in particular persistently stored, providing a historical record of device states and changes. These logs can also be transient in a sense that they are removed and recreated after a power-on-reset of the device.

The measured software and/or device configuration may be validated against a previously measured software and/or device configuration. This validation process may help identify unauthorized changes or potential security breaches.

In some aspects of the present invention, when one or repeatedly measured software and/or device configuration is different from previously measured software and/or device configuration, a register used to store a fingerprint / measurement of previously measured software and/or device configuration/s may be updated. This feature may allow the system to adapt to authorized or unauthorized changes while maintaining a record of device state evolution.

The measurement may be recreated after receiving a recreation trigger signal, allowing for on-demand updates to the information provided with a device's attested state.

The industrial device may be or comprise a manufacturing device and/or a process automation device and/or a logistics device and/or an autonomous vehicle and/or a networking device, making this method applicable to a wide range of industrial applications.

These features and advantages may collectively contribute to a more robust, flexible, and secure attestation system for industrial devices, addressing many of the limitations of traditional attestation methods in dynamic industrial environments.

Summarizing the above, the present method according to the invention allows enhancing the security and trustworthiness of industrial devices in automation environments. These methods and systems may involve the creation and maintenance of measurements for such devices, with a particular focus on recreating and maintaining the measurements provided with attestation evidence after the device boot process. This approach may offer a more accurate and up-to-date representation of the device's integrity throughout its operational lifecycle, even during extended periods of operation without rebooting.

In some advantageous aspects of the invention, the method may involve considering a previous measurement, and recreating this previous measurement as a new measurement and validation of the new, current measurement against the previous measurement. The measurements may be generated by measuring the device software and/or device configuration, potentially involving the evaluation of a cryptographic hash.

In the method according to the invention, the recreated measurement may be stored in a protected storage, which may help prevent unauthorized access or tampering with the attestation data. One or more logs may be generated, which contain information for a verifier to detect changes towards a known-good state of the industrial device. These logs may be persisted, providing a historical record of device states and changes.

In some advantageous aspects of the invention, the measured software and/or device configuration may be validated against a previously measured software and/or device configuration. This validation process may help identify unauthorized changes or potential security breaches. In some cases, when one or repeatedly measured software and/or device configuration is different from previously measured software and/or device configuration, a register containing a (cryptographic) fingerprint of previously measured software and/or device configuration/s may be updated.

The measurement may be recreated after receiving a recreation trigger signal, allowing for on-demand updates to the device's previously measured state. The industrial device may be or comprise a manufacturing device and/or a process automation device and/or a logistics device and/or an autonomous vehicle and/or a networking device, making this method applicable to a wide range of industrial applications. These features and advantages may collectively contribute to a more robust, flexible, and secure utilization of industrial devices, addressing many of the limitations of traditional measurement and attestation methods in dynamic industrial environments.

In the following, the invention is explained in more detail with the accompanying drawing.
Fig. 1 illustrates a block diagram of a system for creating and managing measurements for attestation a schematic diagram.
Fig. 2 illustrates the modification of the known creation of attestation evidence with a recreation of measurements according to the method according to the invention. In a schematic diagram.

The following description sets forth exemplary aspects of the present disclosure. It should be recognized, however, that such description is not intended as a limitation on the scope of the present disclosure. Rather, the description also encompasses combinations and modifications to those exemplary aspects described herein.

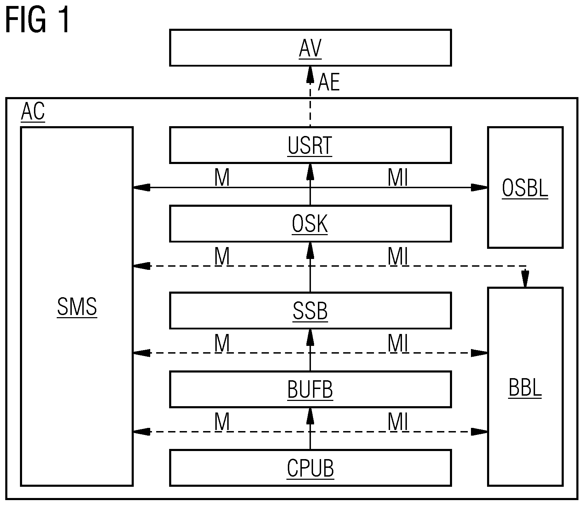

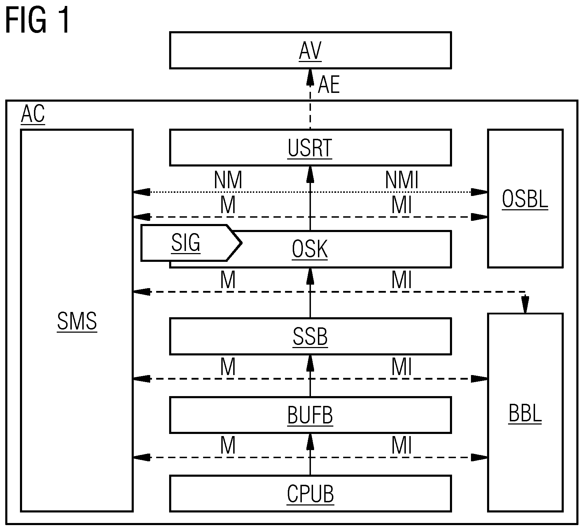

Referring to Fig. 1, the system architecture for creating and managing attestation evidence for an industrial device is depicted. The system includes several components arranged in a sequential structure. At the top level is an Attestation Evidence Verifier AV, which is connected to the main system block labeled Automation Component AC. Attestation evidence by the Automation Component AC is provided to the Attestation Verifier AV via a communication channel.

The topmost component within Automation Component AC is labeled User Space Runtime User Space Runtime USRT. Below the User Space Runtime USRT is the Operating System Kernel OSK component, followed by Second Stage Bootloader SSB, Bios/UEFI First stage Bootloader BUFB, and Boot Rom Functionality CPUB components in descending order. These components are interconnected vertically, suggesting a flow of information or control from bottom to top.

To the left of these components is a Secure Measurement Storage SMS block. On the right side, there are two separate blocks: OS boot log OSBL at the top and BIOS boot log BBL at the bottom.

The diagram illustrates carrying out Measurements M and the flow of Measurement Information MI between the central components (User Space Runtime USRT, Operating System Kernel OSK, SSB, BUFB, Boot Rom Functionality CPUB) and the Secure Measurement Storage SMS, as well as the OS boot log OSBL and BBL blocks with horizontal connections. These Measurements M and the Generation of Measurement Information MI occur at each level of the central components, indicating data and control flow between the components.

In the depicted embodiment according to Fig. 1, the system may create attestation evidence for the Automation Component AC by measuring the device software and/or device configuration. These measurements M may involve computing cryptographic hashes of the software and/or configuration. The attestation may be validated using a remote validation entity, here the Attestation Verifier AV, which can validate the attestation evidence AE provided by the Automation Component AC. The attestation evidence Ae may include the measurements M and measurement information Ml, which can be stored in and retrieved from the Secure Measurement Storage SMS and the OS boot log OSBL and BBL.

In Fig. 2, the process of creating and maintaining measurements as recreated attestation evidence for an industrial device is depicted. According to the invention as described below the attestation evidence (AE) is recreated after the device boot process and during a run-time period of the Automation Component AC. This directly involves the Automation Component AC, which includes components such as the User Space Runtime USRT, Operating System Kernel OSK, SSB, BUFB, and Boot Rom Functionality CPUB, performing a series of measurements M of the device software and/or configuration. These measurements are be stored in the Secure Measurement Storage SMS, providing a secure and tamper-resistant record of the device's state at the time of boot.

In the depicted embodiment, the measurements used as attestation evidence may be kept for at least a runtime period. This may involve maintaining the Measurements M in the Secure Measurement Storage SMS for the duration of the device's operation, until the device is rebooted or until a recreation trigger signal SIG is received.

The recreated measurements M may also be stored in a protected storage, such as the Secure Measurement Storage SMS as described above. This storage may be designed to resist unauthorized access or tampering, ensuring the integrity of the attestation data. In some aspects, the Secure Measurement Storage SMS may be a dedicated hardware component, such as a Trusted Platform Module TPM, or a secure area of the device's memory.

In the embodiment depicted in Fig. 2, the measurements are be recreated after receiving a recreation trigger signal SIG. This signal SIG may be generated by a variety of sources, such as a remote management system, a user action, or a timer. Upon receiving the signal SIG, the Automation Component AC initiates a measurement M reconstruction process, which involves re-measuring the device software and/or configuration and updating the measurements M stored in the Secure Measurement Storage SMS.

In the embodiment depicted in Fig. 2, a measurement reconstruction signal SIG triggers the reconstruction of previously performed measurements M and generating new Measurements NM and generating new Measurement information NMI. This may involve the Automation Component AC recalculating the measurements M of the device software and/or configuration and comparing these new measurements NM with the previously stored measurements M in the Secure Measurement Storage SMS. If any discrepancies are detected, the Automation Component AC may update the attestation in the Secure Measurement Storage SMS and generate a log entry in the OS boot log OSBL or BIOS boot log BBL, providing a record of the change. This feature may enhance the ability of the attestation system to detect and respond to unauthorized changes or potential security breaches.

Referring to Fig. 2, the process of validating the recreated measurement is depicted as well. Here, the new Measurement NM is validated against a previous -measurement M. This previous Measurement M M may be a previously generated measurement M that represents a known-good state of the Automation Component AC. The previous -measurement M may be stored in the Secure Measurement Storage SMS, and may be used as a reference for validating subsequent measurements M.

In the depicted embodiment, the validation process may involve comparing the new measurements NM of the device software and/or configuration with the measurements M obtained in previous measurements M. If any discrepancies are detected, this may indicate a change in the state of the Automation Component AC since the previous measurement M was carried out. This change may be due to a variety of factors, such as a software update, a configuration change, or a potential security breach.

In the embodiment depicted in Fig. 2, one or more logs may be generated during the measurement M process. These logs may contain information for a verifier, such as the Attestation Verifier AV, to detect changes towards a known-good state of the industrial device. The logs may include the measurements NM and measurement information MMI, as well as any detected discrepancies between the new measurement M and the previous measurement NM The logs may be stored in the OS boot log OSBL or BIOS boot log BBL, providing a historical record of the device's states and changes.

In the depicted embodiment, the logs may be persisted, or persistently stored. This may involve storing the logs in a non-volatile memory, such as a hard disk or a flash memory, ensuring that the logs are retained even if the device is powered off or rebooted. This feature may provide a durable record of the device's states and changes, enhancing the ability of the attestation system to detect and respond to unauthorized changes or potential security breaches.

In some aspects, the measured software and/or device configuration may be validated against a previously measured software and/or device configuration. This may involve comparing the new measurements NM with the previous measurements M contained in a register, such as a Platform Configuration Register PCR in a Trusted Platform Module TPM, that stores the previously measured software and/or device configuration. If one or repeatedly measured software and/or device configuration is different from previously measured software and/or device configuration, the register may be updated to reflect the new measurements NM. Referring to Fig. 1 and 2, the Automation Component AC may provide the new measurement NM as Attestation Evidence AE to an Attestation Verifier AV. The Attestation Evidence AE may include the new measurements NM and the new measurement information NMI of the device software and/or configuration, which may be stored in the Secure Measurement Storage SMS and logged in the OS boot log OS boot log OSBL and BIOS boot log BBL. The Attestation Verifier AV may validate and verify the Attestation Evidence AE against known-good values to detect deviations from a known-good or trusted state. This process may enhance the security of the Automation Component AC by involving either a trusted component or a trusted third party, respectively, in the validation process.

In the depicted embodiment, the Operating System Kernel OSK may recalculate cryptographic hashes of components previously measured using an Integrity Measurement Architecture IMA and extend a dedicated Platform Configuration Register PCR with these new measurements NM. This process may involve re-measuring the device software and/or configuration and comparing these new measurements NM with the previously stored measurements M in the Secure Measurement Storage SMS. If any discrepancies are detected, the Automation Component AC may update the measurements M in the Secure Measurement Storage SMS and generate a log entry in the OS boot log OSBL or BIOS boot log BBL, providing a record of the change.

In the depicted embodiment, the OS boot log OSBL may be updated, or a new OS boot log OSBL may be generated containing only new measurement information NMI or differences from the previous log.

In the depicted embodiment, the Secure Measurement Storage SMS may be updated as part of a measurement reconstruction process. This may involve updating the stored measurements with the new measurements, complementing the stored measurements M with additional new measurements NM, invalidating the stored measurements M if discrepancies are detected, or further extending the stored measurements with new measurements NM.

In the depicted embodiment, the Secure Measurement Storage SMS may be a dedicated hardware component, such as a Trusted Platform Module TPM, or a secure area of the device's memory. This storage may be designed to resist unauthorized access or tampering, ensuring the integrity of the attestation data. The Secure Measurement Storage SMS may span the entire height of the Automation Component AC block, indicating its integral role in the validation process.

Referring to Fig. 1 and 2, instead of the Automation Component AC the industrial devices may be or comprise a manufacturing device. In some aspects, instead of the Automation Component, there may be a manufacturing device, that may be a machine or system used in the production of goods, such as a robotic arm, a conveyor belt system, or a computer numerical control CNC machine. The manufacturing device may operate in a highly automated environment, where accurate and up-to-date attestations of the device's state are crucial for maintaining operational integrity and security.

In the depicted embodiment, the industrial device may be or comprise a process automation device. The process automation device may be a system or component used in the automated control of industrial processes, such as a programmable logic controller PLC, a distributed control system DCS, or a supervisory control and data acquisition SCADA system. The process automation device may operate in complex and dynamic environments, where the ability to recreate and maintain attestation evidence after device boot can enhance the device's trustworthiness and resilience against potential security threats.

In the depicted embodiment, instead of an Automation Component AC, the industrial device may be or comprise a logistics device. The logistics device may be a system or component used in the management of the flow of goods, resources, or information, such as a warehouse management system, a transportation management system, or a fleet management system. The logistics device may operate in environments where rapid changes and high levels of interconnectivity are common, making the proposed creation of attestation evidence particularly beneficial for maintaining the industrial device's security and integrity.

In some cases, the industrial device may be or comprise an autonomous vehicle. The autonomous vehicle may be a self-driving car, a drone, a robotic forklift, or any other vehicle capable of sensing its environment and operating without human input. The autonomous vehicle may operate in highly dynamic and unpredictable environments, where the ability to recreate and maintain attestations after device boot can significantly enhance the vehicle's security and trustworthiness.

In each of these cases, the industrial device and/or Automation Component AC may generate Attestation Evidence AE and provide it to an Attestation Verifier AV. The Attestation Evidence AE includes new measurements NM and new measurement information NMI of the device software and/or configuration.

In the depicted embodiment, the measurement reconstruction signal SIG may be generated locally. This local generation of the signal may be performed in a variety of ways. For instance, the signal SIG may be generated cyclically, such as by using a timer. This timer-based approach may allow for regular updates to the attestation evidence, ensuring that the attestation evidence remains up-to-date even during extended periods of operation without rebooting. In other cases, the signal may be generated due to a specific event detected by a peripheral monitoring component. This event-based approach may allow for more responsive updates to the attestation evidence.

In some cases, the measurement logs may be cryptographically signed when persisted. This cryptographic signing may involve applying a digital signature to the log, which can provide a secure and tamper-resistant record of the measurements M, NM and measurement information MI, NMI. The digital signature may be generated using a private key associated with the Automation Component AC, and may be verified using a corresponding public key by the Attestation Verifier AV. This feature may enhance the security and integrity of the logs, making them more resistant to unauthorized access or tampering.

In the depicted embodiment, mismatches between corresponding entries in two subsequent measurement logs may be captured and stored independently. This independent capture and storage of mismatches may involve creating a separate log or register that records any discrepancies detected during the validation process. This separate log or register may be stored in the Secure Measurement Storage SMS, providing a durable record of any detected discrepancies. This feature may enhance the ability to detect and respond to unauthorized changes or potential security breaches.

In the depicted embodiment, different components may perform the initial step of the measurement reconstruction process. For instance, the Boot Rom Functionality CPUB, a dedicated UEFI module, a hypervisor, a kernel driver, or a user space process may initiate the measurement reconstruction process.

In the depicted embodiment, a copy of the booted components may be booted in a dedicated trusted execution environment for measurement reconstruction. This dedicated trusted execution environment may be a separate system or environment, such as an AMD SEV-SNP VM, an Intel TDX VM, a dedicated PCIe card, or a different system with access to the components via a network share. This feature may enhance the robustness and security of the measurement reconstruction process, allowing for a more accurate and reliable recreation of the measurements.

A number of implementations have been described. Nevertheless, it will be understood that various modifications may be made without departing from the spirit and scope of the disclosure. Accordingly, other implementations are within the scope of the following claims.

## Claims

1. Method for creating attestation evidence (AE) for an industrial device (AC), in which a measurement is recreated after device (AC) boot and kept at least for a runtime period and provided as current attestation evidence (AE) for validation.

2. Method according to claim 1, in which a previous measurement as previous attestation evidence (AE) is considered, and the current attestation evidence (AE) is validated against the previous -attestation evidence (AE).

3. Method according to any of the previous claims, in which the attestation evidence (AE) is generated with measuring (M) the device software (CPUB, BUFB, SSB, OSK, USRT) and/or device configuration.

4. Method according to the previous claim, wherein measuring (M) involves evaluating a cryptographic hash.

5. Method according to any of the previous claims, in which the attestation evidence (AE) is provided to a remote attestation verifier (A) entity.

6. Method according to any of the previous claims, wherein the recreated attestation evidence (AE) is stored in a protected storage (SMS).

7. Method according to any of the previous claims, wherein one or more logs (BBL, OSBL) are generated, which contain information (Ml) for a verifier (AV) to detect changes towards a known-good state of the industrial device (AC).

8. Method according to the previous claim, wherein the one or more logs (BBL, OSBL) are are persisted, in particular persistently stored.

9. Method according to any of the previous claims, wherein the measured software and/or device configuration is or are validated against a previously measured software (CPUB, BUFB, SSB, OSK, USRT) and/or device (AC) configuration.

10. Method according to any of the previous claims, wherein one or repeatedly measured software (CPUB, BUFB, SSB, OSK, USRT) and/or device (AC) configuration is or are different from previously measured software (CPUB, BUFB, SSB, OSK, USRT) and/or device (AC) configuration, a register containing previously measured software (CPUB, BUFB, SSB, OSK, USRT) and/or device (AC) configuration/s may be updated.

11. Method according to any of the previous claims, in which the measurement (A) is recreated after receiving a recreation trigger signal.

12. Method according to any of the previous claims, in which the industrial device (AC) is or comprises a manufacturing device and/or a process automation device and/or a logistics device and/or an autonomous vehicle.
